# EUROPÄISCHE PATENTSCHRIFT

(11) **EP 2 734 429 B1**
(45) Veröffentlichungstag und Bekanntmachung des Hinweises auf die Patenterteilung: **21.09.2016**
(21) Anmeldenummer: 12722303.0
(22) Anmeldetag: 18.05.2012
(51) Int. Cl.: B60T 17/22, B60R 16/023, B60T 13/66

(54) **ELEKTRONISCHE BREMSSTEUEREINRICHTUNG FÜR EIN FAHRZEUG SOWIE DIAGNOSEGERÄT, EMPFANGSSTATION UND COMPUTERPROGRAMM**
ELECTRONIC BRAKE CONTROL DEVICE FOR A VEHICLE AND DIAGNOSTIC DEVICE, RECEIVER STATION AND COMPUTER PROGRAM
DISPOSITIF DE COMMANDE DES FREINS ÉLECTRONIQUE POUR UN VÉHICULE, AINSI QUE DISPOSITIF DE DIAGNOSTIC, POSTE DE RÉCEPTION ET PROGRAMME D'ORDINATEUR

(30) Priorität: 23.07.2011 DE 102011108449
(43) Veröffentlichungstag der Anmeldung: 28.05.2014
(73) Patentinhaber: WABCO GmbH, 30453 Hannover (DE)
(72) Erfinder: BARLSEN, Holger, 30851 Langenhagen (DE); RISSE,Rainer, 30982 Pattensen-Reden (DE); STENDER, Axel, 31787 Hameln (DE)
(74) Vertreter: Lauerwald, Jörg
(86) Internationale Anmeldenummer: PCT/EP2012/002129
(87) Internationale Veröffentlichungsnummer: WO 2013/013732

(56) Entgegenhaltungen:
- EP-A2- 2 189 921
- DE-A1- 10 056 565
- DE-A1-102005 048 534

## Beschreibung

Die Erfindung betrifft eine elektronische Bremssteuereinrichtung gemäß dem Anspruch 1.

Allgemein betrifft die Erfindung das Gebiet des Managements von Fahrzeugen im Hinblick auf Wartung und Service. Es ist bekannt, dass bei Straßenfahrzeugen bestimmte vom Hersteller vorgeschriebene Service-Intervalle einzuhalten sind. Im Bereich von Nutzfahrzeugen, d. h. Lastkraftwagen und deren Anhänger, ist die technische Ausstattung mit der Zeit immer komplexer geworden. Zugleich besteht ein Bedarf daran, die Service- und Wartungskosten zu optimieren.

DE 100 56 565 A1 offenbart ein Verfahren und eine Vorrichtung zur Ermittlung der Belastungen eines Kraftfahrzeug-Regelungssystems. DE 10 2005 048 534 A1 offenbart ein Verfahren und eine Anordnung zum Überwachen einer mechanischen Komponente, insbesondere einer Bremse eines Fahrzeugs. EP 2 189 921 A2 offenbart ein Diagnosegerät zur Verbindung mit einem Kraftfahrzeug.

Der Erfindung liegt daher die Aufgabe zugrunde, Mittel anzugeben, durch die mit ohne großen Zusatzaufwand die Service- und Wartungskosten eines Fahrzeugs verringert werden können.

Diese Aufgabe wird durch die im Anspruch 1 angegebene elektronische Bremssteuereinrichtung für ein Fahrzeug gelöst. Die elektronische Bremssteuereinrichtung weist einen oder mehrere Ausgangsanschlüsse zur Betätigung von einer oder mehreren Fahrzeugkomponenten auf, die nicht Teile der Bremsanlage des Fahrzeuges sind, wobei die elektronische Bremssteuereinrichtung einen Speicher zur Datenspeicherung aufweist, der wenigstens einen Speicherplatz zur Abspeicherung von Betriebsdaten einer an den jeweiligen Ausganganschluss angeschlossenen Fahrzeugkomponente aufweist, wobei die elektronische Bremssteuereinrichtung dazu eingerichtet ist, den Betrieb der angeschlossenen Fahrzeugkomponente kennzeichnende Daten zu erfassen und als Gesamtbetriebswert der Fahrzeugkomponente zu sammeln und in dem zugeordneten Speicherplatz zu speichern. Die Erfindung hat den Vorteil, dass durch das Vorsehen von wenigstens einem oder ggf. mehreren Speicherplätzen zur Abspeicherung der Betriebsdaten von Fahrzeugkomponenten die Wartungs- und Servicekosten verringert werden können, indem sie an den jeweiligen konkreten Bedarf der überwachten Fahrzeugkomponente angepasst werden können. Die Serviceintervalle der hinsichtlich ihrer Betriebsdaten überwachten Fahrzeugkomponenten müssen nicht mehr synchron zu den Fahrzeugserviceintervallen festgelegt werden. So kann z. B. bei Fahrzeugkomponenten, die bei einem bestimmten Fahrzeug relativ selten betrieben werden, dies anhand des aus dem Speicherplatz auslesbaren Gesamtbetriebswerts der Fahrzeugkomponente schnell festgestellt werden, so dass bei einem Werkstattaufenthalt schnell erkannt wird, dass an dieser Fahrzeugkomponente keine Arbeiten erforderlich sind. Bei einem anderen Fahrzeug mit häufigerer Benutzung der Fahrzeugkomponente wird dagegen früher auf einen Wartungsbedarf erkannt.

Ein weiterer Vorteil ist, dass für die Erfassung des Gesamtbetriebswerts eine elektronische Bremssteuereinrichtung für ein Fahrzeug vorgesehen ist, die ohnehin bereits einen oder mehrere Ausgangsanschlüsse zum Anschluss und zur Betätigung einer oder mehrerer Fahrzeugkomponenten aufweist. Solche elektronischen Bremssteuereinrichtungen sind bereits weit verbreitet in Anhängefahrzeugen mit elektronisch gesteuerten Bremsanlagen. Solche elektronischen Bremssteuereinrichtungen weisen in der Regel bereits einen Speicher auf, so dass auch in dieser Hinsicht kein zusätzlicher Kostenaufwand erforderlich ist. Die Erfindung kann z. B. für Fahrzeugkomponenten wie Schubböden (walking floor), die als verschiebbare Böden zum Be- und Entladen eines Fahrzeuges vorgesehen sind, oder Schiebeverdecke, wie sie z. B. bei Kippern zum Abdecken der Ladung vorgesehen sind, eingesetzt werden. Je nach Nutzungsart und Nutzungshäufigkeit der einzelnen Fahrzeugkomponenten im jeweiligen Fahrzeug kann damit eine an den Gesamtbetriebswert angepasste Wartung auf einfache Weise durchgeführt werden.

Die Erfindung kann vorteilhaft in Straßenfahrzeugen des Nutzfahrzeugbereichs eingesetzt werden, d. h. in Zugfahrzeugen und Anhängefahrzeugen, z. B. Aufliegern und Deichselanhängern.

Mit der Erfindung können mehrere Fahrzeugkomponenten auf einen jeweiligen Gesamtbetriebswert überwacht werden, wobei dann für jede Fahrzeugkomponente wenigstens ein zugeordneter Speicherplatz für den jeweiligen Gesamtbetriebwert vorgesehen ist. Je nach Fahrzeugkomponente können auch mehrere Arten von den Betrieb der angeschlossenen Fahrzeugkomponente kennzeichnenden Daten, z.B. Dauer und Anzahl von Betätigungen, erfasst werden und als jeweilige Gesamtbetriebswerte in eigenen Speicherplätzen gespeichert werden. Ein weiterer Vorteil ist, dass insbesondere bei einer Überwachung einer größeren Anzahl von durch die elektronische Bremseinrichtung über die Ausgangsanschlüsse gesteuerten Fahrzeugkomponenten auf einfache und schnelle Weise ein Überblick über den gesamten Servicezustand des Fahrzeuges vermittelt werden kann, z. B. indem die einzelnen Gesamtbetriebswerte aus den Speicherplätzen ausgelesen werden und visuell dargestellt werden bzw. automatisch mit Grenzwerten verglichen werden und diese Ergebnisse angezeigt werden.

Die den Betrieb der angeschlossenen Fahrzeugkomponente kennzeichnenden Daten können z. B. die Einschaltzeiten der angeschlossenen Fahrzeugkomponente oder die Einschalthäufigkeit der angeschlossenen Fahrzeugkomponente sein, oder auch beide Daten. Werden die Einschaltzeiten der angeschlossenen Fahrzeugkomponente überwacht, so werden diese von der elektronischen Bremssteuereinrichtung gemessen und als Gesamtbetriebswert, der dann einer Gesamtbetriebsdauer entspricht, aufsummiert und in dem zugeordneten Speicherplatz gespeichert. Werden als den Betrieb der angeschlossenen Fahrzeugkomponente kennzeichnende Daten die Einschalthäufigkeit der angeschlossenen Fahrzeugkomponente erfasst, so wird die Einschalthäufigkeit, d.h. die Anzahl der Betätigungen, von der elektronischen Bremssteuereinrichtung gezählt und als Gesamtbetriebswert, der in diesem Fall einer Gesamteinschalthäufigkeit entspricht, aufsummiert und in dem zugeordneten Speicherplatz gespeichert.

Gemäß einer vorteilhaften Ausgestaltung der Erfindung ist die elektronische Bremssteuereinrichtung dazu eingerichtet, die Einschaltzeiten der angeschlossenen Fahrzeugkomponente zu messen und als Gesamtbetriebsdauer der Fahrzeugkomponente aufzusummieren und in einem zugeordneten ersten Speicherplatz zu speichern, und zusätzlich die Einschalthäufigkeit der angeschlossenen Fahrzeugkomponente zu zählen und als Gesamteinschalthäufigkeit der Fahrzeugkomponente aufzusummieren und in einem zugeordneten zweiten Speicherplatz zu speichern. Dies hat den Vorteil, dass der Betrieb der Fahrzeugkomponente im Hinblick auf verschiedene den Betrieb kennzeichnende Daten erfasst und überwacht werden kann, was eine tiefergehende Überwachung erlaubt.

Gemäß einer vorteilhaften Weiterbildung der Erfindung weist die elektronische Bremssteuereinrichtung eine Telematikeinheit oder eine Schnittstelle zu einer Telematikeinheit, die in dem Fahrzeug vorgesehen ist, auf, wobei die Telematikeinheit zur drahtlosen Datenübertragung von Daten aus dem Fahrzeug zu einer entfernten Empfangsstation eingerichtet ist. Dies hat den Vorteil, dass eine quasi permanente Überwachung der Servicesituation eines Fahrzeuges von der Ferne aus möglich ist, z. B. in einer Leitstation eines Logistik- oder Fuhrunternehmens, das eine Fahrzeugflotte mit einer Vielzahl von Fahrzeugen betreibt. In der Empfangsstation, die Teil der genannten Leitstation sein kann, können die Daten des Fahrzeuges konsolidiert und gemeinsam mit den Daten anderer Fahrzeuge bearbeitet werden. Dies erlaubt eine Verbesserung der Planung des Fahrzeugeinsatzes und eine Vorhersage, wann für welches Fahrzeug ein Werkstattaufenthalt vorzusehen ist.

Gemäß einer vorteilhaften Weiterbildung der Erfindung ist die elektronische Bremssteuereinrichtung dazu eingerichtet, den im Speicherplatz gespeicherten Gesamtbetriebswert der Fahrzeugkomponente über die Telematikeinheit an die entfernte Empfangsstation zu übertragen. Die Übertragung kann z. B. durch die elektronische Bremssteuereinrichtung initiiert werden, z. B. in Form einer Übertragung in festen Zeitabständen oder bei bestimmten Ereignissen, z. B. wenn der gespeicherte Gesamtbetriebswert einen vorgegebenen Grenzwert erreicht, der eine Wartung der zugeordneten Fahrzeugkomponente erfordert. Es kann auch vorgesehen sein, dass der im Speicherplatz gespeicherte Gesamtbetriebswert auf Initiative der entfernten Empfangsstation abgefragt wird und von der elektronischen Bremssteuereinrichtung dann über die Telematikeinheit übertragen wird.

Gemäß der Erfindung ist die elektronische Bremssteuereinrichtung dazu eingerichtet, den Gesamtbetriebswert der Fahrzeugkomponente auf Erreichen oder Überschreiten eines Maximalwertes zu überwachen und bei Erreichen oder Überschreiten des Maximalwertes ein Warnsignal zu erzeugen. Das Warnsignal kann z. B. ein akustisches oder optisches Signal in dem Fahrzeug bzw. im Zugfahrzeug sein, das dem Fahrer signalisiert wird. Insbesondere kann ein Warnsignal erzeugt werden, dass auf einen Servicebedarf hindeutet, so dass der Fahrer darüber informiert wird, eine Werkstatt aufzusuchen. Das Warnsignal kann auch über die Telematikeinheit an die entfernte Empfangsstation übertragen werden, so dass dort das Warnsignal als Hinweis für einen Servicebedarf des Fahrzeuges ausgewertet werden kann.

Gemäß einer vorteilhaften Weiterbildung der Erfindung weist der Speicher wenigstens einen Speicherplatz zur Abspeicherung von Betriebsdaten wenigstens einer von der elektronischen Bremssteuereinrichtung gesteuerten Bremsanlagenkomponente aufweist, wobei die elektronische Bremssteuereinrichtung dazu eingerichtet ist, den Betrieb der angeschlossenen Bremsanlagenkomponente kennzeichnende Daten zu erfassen und als Gesamtbetriebswert der Bremsanlagenkomponente zu sammeln und in dem zugeordneten Speicherplatz zu speichern. Dies hat den Vorteil, dass auch die Bremsanlagenkomponenten, sofern sie einem Servicebedarf unterliegen, in das erfindungsgemäße Service-und Wartungskonzept einbezogen werden können und automatisch jeweils separat auf ihre Gesamtbetriebswerte, wie z.B. Gesamtbetriebsdauer und/oder Gesamteinschalthäufigkeit, überwacht werden können. So kann z. B. die Einschaltdauer bzw. die Einschalthäufigkeit von Magnetventilen eines Antiblockiersystems überwacht werden.

Die Erfindung wird nachfolgend anhand von Ausführungsbeispielen unter Verwendung von Zeichnungen näher erläutert.

Es zeigen
- Figur 1: ein Fahrzeug, bestehend aus einem Zugfahrzeug und einem Anhänger, und
- Figur 2: eine elektronische Bremssteuereinrichtung für ein Fahrzeug.

In den Figuren werden gleiche Bezugszeichen für einander entsprechende Elemente verwendet.

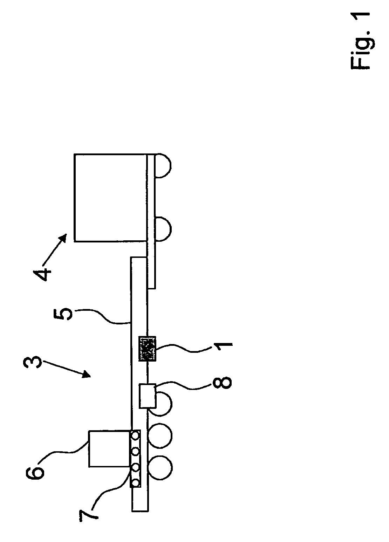

Die Figur 1 zeigt in schematischer Darstellung als Fahrzeug eine Sattelzugmaschine 4 mit einem daran angekoppelten Anhänger 3 in Form eines Sattelaufliegers. Der Anhänger 3 weist eine Ladefläche 5 auf. Im Bereich der Ladefläche 5 ist ein verschiebbarer Ladeboden 7 mit elektrischem Antrieb angeordnet, der über ein elektrisches Signal betätigt werden kann. Durch Betätigung des verschiebbaren Ladebodens 7 kann eine auf dem Ladeboden 7 angeordnete Ladung 6 verschoben werden. Hierdurch kann das Be- und Entladen der Ladefläche 5 vereinfacht werden.

Der Anhänger 3 weist ein elektronisch gesteuertes Bremssystem auf, das von einer elektronischen Bremssteuereinrichtung 1 gesteuert wird. Die elektronische Bremssteuereinrichtung 1 kann z. B. eine Steuerelektronik und elektrische Aktuatoren in Form von Magnetventilen aufweisen. Die elektronische Bremssteuereinrichtung 1 ist mit den Radbremsen des Anhängers 3 verbunden. Von den Radbremsen ist in der Figur 1 beispielhaft eine Radbremse 8 dargestellt. Die elektronische Bremssteuereinrichtung 1 ist ferner über eine elektrische Leitung oder einen Datenbus mit dem verschiebbaren Ladeboden 7 verbunden, der als Fahrzeugkomponente vorgesehen ist, die nicht Teil der Bremsanlage des Anhängers 3 ist.

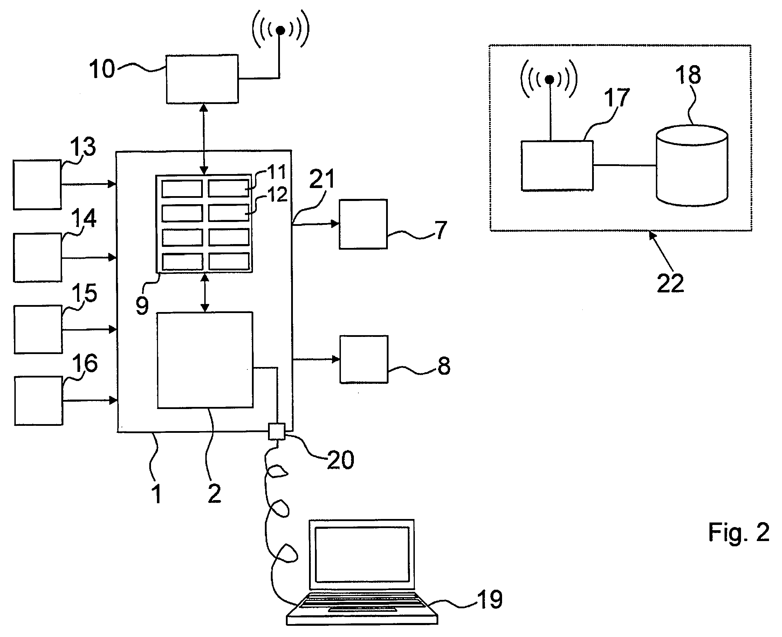

Die Figur 2 zeigt die elektronische Bremssteuereinrichtung 1 mit weiteren Details sowie weitere für die Erläuterung der Erfindung dargestellte Elemente.

Die elektronische Bremssteuereinrichtung 1 kann mit mehreren Sensoren 13, 14, 15, 16 verbunden sein, um Eingangssignale zu erfassen, z. B. mit Raddrehgeschwindigkeitssensoren, über die die Raddrehgeschwindigkeiten einzelner Räder des Anhängers 3 erfasst werden können. Die elektronische Bremssteuereinrichtung weist einen oder mehrere Ausgangsanschlüsse 21 auf, die dazu eingerichtet sind, dass eine oder mehrere Fahrzeugkomponenten, die nicht Teile der Bremsanlage des Fahrzeugs sind, daran angeschlossen werden und durch die elektronische Bremssteuereinrichtung gesteuert werden. An dem Ausgangsanschluss 21 ist der verschiebbare Ladeboden 7 angeschlossen. Die elektronische Bremssteuereinrichtung 1 ist ferner, wie schon anhand der Figur 1 erläutert, mit der Radbremse 8 verbunden. Die elektronische Bremssteuereinrichtung 1 weist einen Rechner 2 zur Ausführung eines Steuerprogramms auf, z. B. in der Form eines Mikrocomputers oder Mikrocontrollers. Die elektronische Bremssteuereinrichtung 1 weist ferner einen Speicher 9 zur Datenspeicherung auf. Der Speicher 9 kann als separates Bauteil oder als in den Rechner 2 integrierter Speicher vorgesehen sein.

Der Speicher 9 weist eine Vielzahl von Speicherplätzen auf, von denen beispielhaft ein erster Speicherplatz 11 und ein zweiter Speicherplatz 12 beziffert sind. Der erste Speicherplatz 11 dient zur Erfassung der Einschaltdauer der Radbremse 8, der zweite Speicherplatz 12 dient zur Erfassung der Einschaltdauer des verschiebbaren Ladebodens 7. In dem jeweiligen Speicherplatz 11, 12 wird die jeweilige Einschaltdauer der Radbremse 8 bzw. des verschiebbaren Ladebodens 7 aufsummiert und als Gesamtbetriebswerte gespeichert. Diese Schritte werden durch den Rechner 2 durchgeführt, der auch das Einschalten und Ausschalten des verschiebbaren Ladebodens 7 bzw. die Betätigung der Radbremse 8 steuert.

Zum Auslesen des Speichers 9, insbesondere des ersten Speicherplatzes 11 und des zweiten Speicherplatzes 12, kann ein Diagnosegerät 19 über einen elektrischen Anschluss 20 mit der elektronischen Bremssteuereinrichtung 1 verbunden werden. Das Diagnosegerät 19 kann z. B. ein handelsüblicher Computer mit einem darauf installierten Diagnoseprogramm sein. Das Diagnosegerät 19 kommuniziert mit dem Rechner 2 derart, dass der Rechner 2 die in dem ersten Speicherplatz 11 und dem zweiten Speicherplatz 12 gespeicherten Gesamtbetriebswerte an das Diagnosegerät 19 überträgt. Das Diagnosegerät 19 wertet diese Daten aus und zeigt die Daten bzw. die Ergebnisse der Auswertung auf einem Display an.

Die elektronische Bremssteuereinrichtung 1 ist ferner mit einer Telematikeinheit 10 verbunden. Die Telematikeinheit 10 kann an oder in dem Anhänger 3 oder dem Zugfahrzeug 4 angeordnet sein. Die Telematikeinheit 10 kann auch Teil der elektronischen Bremssteuereinrichtung 1 sein. Die Telematikeinheit 10 ist zur drahtlosen Datenübertragung an eine entfernte Empfangsstation 22 eingerichtet. Die entfernte Empfangsstation 22 weist ebenfalls eine Telematikeinheit 17 sowie Mittel zum Auswerten und Speichern der empfangenen Daten auf, die in der Figur 2 vereinfacht als Datenspeicher 18 dargestellt sind. Die Telematikeinheiten 10, 17 sind jeweils zur bidirektionalen Datenübertragung, d .h zum Senden und zum Empfangen, ausgebildet.

Die elektronische Bremssteuereinrichtung 1 weist ein Steuerprogramm auf, das auf dem Rechner 2 ausgeführt wird, bei dem in regelmäßigen Zeitabständen die in dem ersten Speicherplatz 11 und dem zweiten Speicherplatz 12 gespeicherten Gesamtbetriebswerte über die Telematikeinheit 10 an die entfernte Empfangsstation 22 übertragen werden. In der Empfangsstation 22 werden die empfangenen Gesamtbetriebswerte in dem Datenspeicher 18 gespeichert. Zusätzlich kann eine Auswertung auf Erreichen von Serviceintervallgrenzen und eine Anzeige eines Wartungsbedarfs in der Empfangsstation 22 erfolgen.

## Patentansprüche

1. Elektronische Bremssteuereinrichtung (1) für ein Fahrzeug (3, 4) mit einem oder mehreren Ausgangsanschlüssen (21) zur Betätigung von einer oder mehreren Fahrzeugkomponenten (7), die nicht Teile der Bremsanlage des Fahrzeuges (3, 4) sind, wobei die elektronische Bremssteuereinrichtung (1) einen Speicher (9) zur Datenspeicherung aufweist, der wenigstens einen Speicherplatz (11, 12) zur Abspeicherung von Betriebsdaten einer an den jeweiligen Ausganganschluss (7) angeschlossenen Fahrzeugkomponente (7) aufweist, wobei die elektronische Bremssteuereinrichtung (1) dazu eingerichtet ist, den Betrieb der angeschlossenen Fahrzeugkomponente (7) kennzeichnende Daten zu erfassen und als Gesamtbetriebswert der Fahrzeugkomponente (7) zu sammeln und in dem zugeordneten Speicherplatz (11, 12) zu speichern, **dadurch gekennzeichnet, dass** die elektronische Bremssteuereinrichtung (1) dazu eingerichtet ist, den Gesamtbetriebswert der Fahrzeugkomponente (7) auf Erreichen oder Überschreiten eines Maximalwertes zu überwachen und bei Erreichen oder Überschreiten des Maximalwertes ein Warnsignal zu erzeugen.

2. Elektronische Bremssteuereinrichtung nach Anspruch 1, **dadurch gekennzeichnet, dass** die elektronische Bremssteuereinrichtung (1) dazu eingerichtet ist, als den Betrieb der angeschlossenen Fahrzeugkomponente (7) kennzeichnende Daten die Einschaltzeiten der angeschlossenen Fahrzeugkomponente (7) zu messen und als Gesamtbetriebswert der Fahrzeugkomponente (7) aufzusummieren und in dem zugeordneten Speicherplatz (11, 12) zu speichern.

3. Elektronische Bremssteuereinrichtung nach einem der vorhergehenden Ansprüche, **dadurch gekennzeichnet, dass** die elektronische Bremssteuereinrichtung (1) dazu eingerichtet ist, als den Betrieb der angeschlossenen Fahrzeugkomponente (7) kennzeichnende Daten die Einschalthäufigkeit der angeschlossenen Fahrzeugkomponente (7) zu zählen und als Gesamtbetriebswert der Fahrzeugkomponente (7) aufzusummieren und in dem zugeordneten Speicherplatz (11, 12) zu speichern.

4. Elektronische Bremssteuereinrichtung nach einem der vorhergehenden Ansprüche, **dadurch gekennzeichnet, dass** die elektronische BremsSteuereinrichtung (1) eine Telematikeinheit (10) oder eine Schnittstelle zu einer Telematikeinheit (10), die in dem Fahrzeug (3, 4) vorgesehen ist, aufweist, wobei die Telematikeinheit (10) zur drahtlosen Datenübertragung von Daten aus dem Fahrzeug (3, 4) zu einer entfernten Empfangsstation (22) eingerichtet ist.

5. Elektronische Bremssteuereinrichtung nach Anspruch 4, **dadurch gekennzeichnet, dass** die elektronische Bremssteuereinrichtung (1) dazu eingerichtet ist, den im Speicherplatz (11, 12) gespeicherten Gesamtbetriebswert der Fahrzeugkomponente (7) über die Telematikeinheit (10) an die entfernte Empfangsstation (22) zu übertragen.

6. Elektronische Bremssteuereinrichtung nach einem der vorhergehenden Ansprüche, **dadurch gekennzeichnet, dass** der Speicher (9) wenigstens einen Speicherplatz (11, 12) zur Abspeicherung von Betriebsdaten wenigstens einer von der elektronischen Bremssteuereinrichtung (1) gesteuerten Bremsanlagenkomponente (8) aufweist, wobei die elektronische Bremssteuereinrichtung (1) dazu eingerichtet ist, den Betrieb der angeschlossenen Bremsanlagenkomponente (8) kennzeichnende Daten zu erfassen und als Gesamtbetriebswert der Bremsanlagenkomponente (8) zu sammeln und in dem zugeordneten Speicherplatz (11, 12) zu speichern.

## Claims

1. Electronic brake control device (1) for a vehicle (3, 4) having one or more output connections (21) for activating one or more vehicle components (7) which are not parts of the brake system of the vehicle (3, 4), wherein the electronic brake control device (1) has a memory (9) for storing data, which memory (9) has at least one memory location (11, 12) for storing operational data of a vehicle component (7) which is connected to the respective output connection (7), wherein the electronic brake control device (1) is configured to detect data characterizing the operation of the connected vehicle component (7) and to collect it as an overall operational value of the vehicle component (7) and store it in the assigned memory location (11, 12), **characterized in that** the electronic brake control device (1) is configured to monitor the overall operational value of the vehicle component (7) to determine whether a maximum value was reached or exceeded, and to generate a warning signal when the maximum value is reached or exceeded.

2. Electronic brake control device according to Claim 1, **characterized in that** the electronic brake control device (1) is configured to measure, as data characterizing the operation of the connected vehicle component (7), the switch-on times of the connected vehicle component (7) and to sum them as an overall operational value of the vehicle component (7) and store them in the assigned memory location (11, 12).

3. Electronic brake control device according to one of the preceding claims, **characterized in that** the electronic brake control device (1) is configured to count, as data characterizing the operation of the connected vehicle component (7), the switch-on frequency of the connected vehicle component (7) and to sum it as an overall operational value of the vehicle component (7) and store it in the assigned memory location (11, 12).

4. Electronic brake control device according to one of the preceding claims, **characterized in that** the electronic brake control device (1) has a telematics unit (10) or an interface with a telematics unit (10) which is provided in the vehicle (3, 4), wherein the telematics unit (10) is configured for wireless data transmission of data from the vehicle (3, 4) to a remote receiver station (22).

5. Electronic brake control device according to claim 4, **characterized in that** the electronic brake control device (1) is configured to transmit the overall operational value of the vehicle component (7), stored in the memory location (11, 12), to the remote receiver station (22) via the telematics unit (10).

6. Electronic brake control device according to one of the preceding claims, **characterized in that** the memory (9) has at least one memory location (11, 12) for storing operational data of at least one brake system component (8) which is controlled by the electronic brake control device (1), wherein the electronic brake control device (1) is configured to detect data characterizing the operation of the connected brake system component (8), to collect said data as an overall operational value of the brake system component (8) and to store it in the assigned memory location (11, 12).

## Revendications

1. Dispositif de commande électronique des freins (1) destiné à un véhicule (3, 4), comportant une ou plusieurs bornes de sortie (21) pour l'actionnement d'un ou de plusieurs composants de véhicule (7) qui ne font pas partie du système de freinage du véhicule (3, 4), dans lequel le dispositif de commande électronique des freins (1) comporte une mémoire (9) pour l'enregistrement de données, qui comporte un emplacement de mémoire (11, 12) destiné à l'enregistrement de données de fonctionnement d'un composant de véhicule (7) raccordé à la borne de sortie (7) respective, dans lequel le dispositif de commande électronique des freins (1) est conçu pour acquérir des données caractérisant le fonctionnement du composant de véhicule (7) raccordé, pour les collecter sous forme de valeur de fonctionnement globale des composants de véhicule (7) et pour les stocker dans l'emplacement de mémoire (11, 12) correspondant, **caractérisé en ce que** le dispositif de commande électronique des freins (1) est conçu pour surveiller la valeur de fonctionnement globale des composants de véhicule (7) lorsqu'une valeur maximale est atteinte ou dépassée et pour générer un signal d'alarme lorsque la valeur maximale est atteinte ou dépassée.

2. Dispositif de commande électronique des freins selon la revendication 1, **caractérisé en ce que** le dispositif de commande électronique des freins (1) est conçu pour mesurer, en tant que données caractérisant le fonctionnement des composants de véhicule (7) raccordés, les instants d'activation des composants de véhicule (7) raccordés, pour les totaliser en tant que valeur de fonctionnement globale des composants de véhicule (7) et pour les stocker dans l'emplacement de mémoire (11, 12) correspondant.

3. Dispositif de commande électronique des freins selon l'une quelconque des revendications précédentes, **caractérisé en ce que** le dispositif de commande électronique des freins (1) est conçu pour compter, en tant que données caractérisant le fonctionnement des composants de véhicule (7) raccordés, la fréquence d'activation des composants de véhicule (7) raccordés, pour les totaliser en tant que valeur de fonctionnement globale des composants de véhicule (7) et pour les stocker dans l'emplacement de mémoire (11, 12) associé.

4. Dispositif de commande électronique des freins selon l'une quelconque des revendications précédentes, **caractérisé en ce que** le dispositif de commande électronique des freins (1) comporte une unité télématique (10) ou une interface avec une unité télématique (10), qui est prévue dans le véhicule (3, 4), dans lequel l'unité télématique (10) est conçue pour la transmission sans fil de données du véhicule (3, 4) vers une station de réception distante (22).

5. Dispositif de commande électronique des freins selon la revendication 4, **caractérisé en ce que** le dispositif de commande électronique des freins (1) est conçu pour transmettre par l'intermédiaire de l'unité télématique (10) à la station de réception distante (22) la valeur de fonctionnement globale des composants de véhicule (7) stockée dans l'emplacement de mémoire (11, 12).

6. Dispositif de commande électronique des freins selon l'une quelconque des revendications précédentes, **caractérisé en ce que** la mémoire (9) comporte au moins un emplacement de mémoire (11, 12) pour le stockage de données de fonctionnement d'au moins un composant du système de freinage (8) commandé par le dispositif de commande électronique des freins (1), dans lequel le dispositif de commande électronique des freins (1) est conçu pour acquérir des données caractérisant le fonctionnement des composants (8) raccordés du système de freinage, pour les collecter en tant que valeur de fonctionnement globale des composants (8) du système de freinage et pour les stocker dans l'emplacement de mémoire (11, 12) correspondant.
